# EUROPÄISCHE PATENTSCHRIFT

(11) **EP 3 348 040 B1**
(45) Veröffentlichungstag und Bekanntmachung des Hinweises auf die Patenterteilung: **04.11.2020**
(21) Anmeldenummer: 16798071.3
(22) Anmeldetag: 09.09.2016
(51) Int. Cl.: H04L 29/06, H04W 12/08, H04W 88/02, H04W 12/12, H04W 12/06

(54) **VERFAHREN ZUR ERSTELLUNG EINER DATENBANK MIT EINEM MOBILGERÄT UND EINEM IDENTIFIKATIONSPARAMETER**
METHOD FOR CREATING A DATABASE USING A MOBILE DEVICE AND AN IDENTIFICATION PARAMETER
PROCÉDÉ POUR PRODUIRE UNE BASE DE DONNÉES AU MOYEN D'UN APPAREIL MOBILE ET D'UN PARAMÈTRE D'IDENTIFICATION

(30) Priorität: 11.09.2015 DE 102015011671
(43) Veröffentlichungstag der Anmeldung: 18.07.2018
(73) Patentinhaber: Artegic AG, 53177 Bonn (DE)
(72) Erfinder: VON LIEVEN, Stefan, 53173 Bonn (DE); SAYN, Jörg, 53343 Wachtberg (DE)
(74) Vertreter: Borrmann, Eric
(86) Internationale Anmeldenummer: PCT/DE2016/000341
(87) Internationale Veröffentlichungsnummer: WO 2017/041780

(56) Entgegenhaltungen:
- WO-A1-2013/116894
- WO-A1-2014/186038
- WO-A2-2006/008559
- NAEIM ABEDI ET AL: "Bluetooth and Wi-Fi MAC address based crowd data collection and monitoring : benefits, challenges and enhancement", AUSTRALASIAN TRANSPORT RESEARCH FORUM 2013, 2. Oktober 2013 (2013-10-02), Seiten 1-17, XP055218734, Brisbane, Australia

## Beschreibung

Die Erfindung betrifft ein Verfahren zur Erstellung einer Datenbank, bei welchem ein Mobilgerät und ein Identifikationsparameter verwendet wird. Die Erfindung wird durch die unabhängigen Ansprüche definiert.

Ein derartiges Verfahren ist aus der DE 10 2007 057 563 B4 bekannt. Dabei wird ein Mobilgerät durch eine Basisstation zur Übermittlung von Informationen bezüglich des Mobilgerätes veranlasst. Die Basisstation empfängt die übermittelten Informationen, und das Mobilgerät wird durch die Basisstation anhand der übermittelten Informationen, insbesondere mittels eines Identifikationsparameters, identifiziert. Weiterhin beschreibt die DE 10 2007 057 563 B4, Ergebnisse einer Peilung und/oder Ortung des Mobilgerätes in einer Datenbank abzulegen, auf welche die Basisstation Zugriff hat. Insbesondere ist die Datenbank integraler Bestandteil der Basisstation, welche die Peilung und/oder Ortung des Endgerätes ausführt, die zum Identifizieren, Interzeptieren, Manipulieren und/oder Abhören des Mobilgerätes im Abdeckungsbereich des Mobilfunknetzes angeordnet wird.

Die WO2013/116894 A1 gehört ebenfalls zum relevanten Stand der Technik.

Der Nachteil des in der DE 10 2007 057 563 B4 beschriebenen Verfahrens ist, dass es sich um ein aktives Verfahren handelt, das eine direkte Einflussnahme auf das Mobilgerät erfordert. Solche Manipulationen sind üblicherweise nur bei Nutzung durch Sicherheitskräfte zulässig, welche durch einschlägige Rechtsvorschriften und Verordnungen zum Erstellen und Abrufen der oben genannten Datenbank, zum Identifizieren, Interzeptieren, Manipulieren und/oder Abhören des Mobilgerätes ermächtigt sind. So kann dieses Verfahren nicht für eine Gruppe von Personen bereitgestellt werden, welche nicht durch einschlägige Rechtsvorschriften und Verordnungen zum Erstellen und Abrufen der oben genannten Datenbank, zum Identifizieren, Interzeptieren, Manipulieren und/oder Abhören des Mobilgerätes ermächtigt sind. Zum Beispiel kann in einer medizinischen Notfallsituation ein Arzt nicht informiert werden, welcher sich zufällig in einer näheren Umgebung eines Notfallortes befindet, weil ein Zugriff auf eine mittels des in der DE 10 2007 057 563 B4 beschriebenen Verfahrens erstellte Datenbank nicht autorisiert ist.

Aufgabe der Erfindung ist es daher, ein alternatives Verfahren zu dem in der DE 10 2007 057 563 B4 beschriebenen Verfahren zur Erstellung einer Datenbank bereitzustellen, welches nicht nur von Sicherheitskräften verwendet werden kann.

Diese Aufgabe wird erfindungsgemäß durch ein Verfahren mit den Merkmalen des Patentanspruchs 1 und einem System mit den Merkmalen des Patentanspruches 13 gelöst. Vorteilhafte Ausgestaltungen mit zweckmäßigen Weiterbildungen der Erfindung ergeben sich aus den übrigen Patentansprüchen, der Beschreibung und den Figuren.

Um ein alternatives Verfahren zu dem in der DE 10 2007 057 563 B4 beschriebenen Verfahren zur Erstellung einer Datenbank bereitzustellen, welches nicht nur von Sicherheitskräften verwendet werden kann, wird ein Verfahren vorgeschlagen, bei welchem ein Mobilgerät, zumindest ein Identifikationsparameter, eine Eingabeschnittstelle, eine Registrierungseinheit und ein erster Scanner mit einem Empfangsbereich verwendet wird. Das vorgeschlagene Verfahren sieht vor, dass in einem ersten Schritt das Mobilgerät in den Empfangsbereich des ersten Scanners eingebracht wird, in einem zweiten Schritt mittels des Mobilgerätes der Identifikationsparameter ausgesendet wird, in einem dritten Schritt der Identifikationsparameter vom ersten Scanner empfangen wird, in einem vierten Schritt mittels der Registrierungseinheit ein Zugang zur Eingabeschnittstelle bereitgestellt wird, in einem fünften Schritt eine manuelle Bedienung der Eingabeschnittstelle erfolgt und mittels der manuellen Bedienung eine Eingabe von zumindest einer Zusatzinformation durchgeführt wird, in einem sechsten Schritt eine Datenstruktur erstellt wird, in welcher die Zusatzinformation dem Identifikationsparameter zugeordnet wird, und in einem siebten Schritt die Datenstruktur in einer Datenbank gespeichert wird. Vorteilhafterweise wird dem Identifikationsparameter mehr als eine Zusatzinformation, d.h. Zusatzinformationen, zugeordnet und in der Datenstruktur zusammengefasst.

Die Schritte eins bis sieben können in der oben beschriebenen Reihenfolge ausgeführt werden. Möglich ist auch, dass eine andere Reihenfolge der Schritte ausgeführt wird. So kann beispielsweise während oder auch nach der manuellen Bedienung der Eingabeschnittstelle der Identifikationsparameter vom ersten Scanner empfangen werden. Auch kann mittels der Registrierungseinheit der Zugang zur Eingabeschnittstelle bereitgestellt werden, bevor das Mobilgerät in den Empfangsbereich des ersten Scanners eingebracht wird.

Das Mobilgerät kann im Sinne der Erfindung ein Mobiltelefon, eine Smartwatch, ein Fitnesstracker, ein Bluetoothkopfhörer oder ein Headset sein, wobei das Mobilgerät über eine Funkschnittstelle zur Vernetzung mit anderen Geräten verfügt. Insbesondere sendet das Mobilgerät in regelmäßigen Abständen Datenpakete aus, welche zumindest den Identifikationsparameter umfassen. Der Identifikationsparameter ist bevorzugt eine dem Mobilgerät zugeordnete MAC (Media Access Control)- Adresse oder eine Bluetooth-Addresse. Insbesondere stellt der Identifikationsparameter eine weltweit eindeutige Kennung des Mobilgerätes dar. Dies ist dadurch gewährleistet, dass der Identifikationsparameter von einer zentralen Institution an Hersteller von Mobilgeräten vergeben wird.

In dem ersten Schritt des vorgeschlagenen Verfahrens wird das Mobilgerät in den Empfangsbereich des ersten Scanners eingebracht. Besonders vorteilhaft befindet sich das Mobilgerät beim Einbringen des Mobilgerätes in den Empfangsbereich des ersten Scanners in einer unmittelbaren Nähe eines Benutzers des Mobilgerätes. Vorzugsweise wird das Mobilgerät vom Benutzer am Körper getragen. Eine spezielle Variante des Verfahrens sieht vor, dass das Mobilgerät manuell in den Empfangsbereich des ersten Scanners eingebracht wird. Manuell meint händisch und insbesondere nicht maschinell, sondern stromlos und ohne elektrische Hilfsmittel.

Beispielsweise kann das Mobilgerät auf eine Auflage gelegt werden, welche sich in einer unmittelbaren Nähe, bevorzugt in einem Abstand von weniger als 20 Zentimeter, des ersten Scanners befindet. Die Auflage ist vorzugsweise unbeweglich zu dem ersten Scanner angeordnet, d.h. die Auflage hat einen festen Abstand zum ersten Scanner.

Ein Aussenden des Identifikationsparameters mittels des Mobilgerätes erfolgt bevorzugt in zeitlich periodischen Abständen und erfolgt insbesondere automatisch, d.h. ohne eine manuelle Initiierung. Bevorzugt nachdem der Identifikationsparameter vom ersten Scanner empfangen wurde, wird mittels der Registrierungseinheit ein Zugang zur Eingabeschnittstelle bereitgestellt. Die Registrierungseinheit kann beispielsweise ein QR-Code oder ein Near-Field-Communication (NFC)- Tag sein. So wird vorteilhafterweise der QR-Code, welcher auf einer Oberfläche abgebildet ist, zum Beispiel auf einem Papier oder einem Bildschirm, mittels des Mobilgerätes eingelesen und über den eingelesenen QR-Code auf dem Mobilgerät eine Webseite zur Registrierung geöffnet. In einer weiteren Ausführungsform kann über das Mobilgerät eine Webseite mittels des NFC-Tags geöffnet werden. Bei den Varianten, bei welchen auf dem Mobilgerät eine Webseite geöffnet wird, stellt die geöffnete Webseite die Eingabeschnittstelle dar. Auf der geöffneten Webseite wird die Zusatzinformation manuell eingegeben.

Weiterhin ist es möglich und liegt im Rahmen der Erfindung, dass in dem NFC-Tag eine Telefonnummer hinterlegt ist, an welche eine SMS gesendet wird. In diesem Fall ist als Eingabeschnittstelle im Sinne der Erfindung eine Tastatur des Mobilgerätes zu verstehen, mittels welcher ein Benutzer die SMS manuell abschickt. Die Zusatzinformation stellt in diesem Fall die beim Versenden der SMS mitgesendete Telefonnummer des Mobilgerätes dar.

Eine weitere vorteilhafte Ausführungsform kann vorsehen, dass die Registrierungseinheit als ein Barcodescanner ausgeführt ist, welcher eine Scanfläche zum Scannen eines Barcodes aufweist, wobei die Scanfläche die Eingabeschnittstelle im Sinne der Erfindung ausbildet. Auch in diesem Fall ist eine manuelle Bedienung der Eingabeschnittstelle vorgesehen, indem der Barcode manuell an die Scanfläche gehalten wird. Wird der Barcode an die Scanfläche gehalten, so wird dieser vom Barcodescanner eingelesen, wobei der Barcode vorzugsweise die Zusatzinformation enthält. Der Barcode kann beispielsweise auf einem Papier oder auf einen Display des Mobilgerätes abgebildet sein.

In einer besonderen Ausgestaltung ist die Registrierungseinheit als ein Terminal ausgeführt, welcher die Eingabeschnittstelle, bevorzugt in Form einer Tastatur oder eines Bildschirmes mit einer Berührungseingabe, aufweist. Eine manuelle Eingabe der Zusatzinformation an dem Terminal entspricht dann im Sinne der Erfindung der manuellen Bedienung der Eingabeschnittstelle.

Wesentlich für die Erfindung ist, dass in jeder Ausführungsform eine manuelle Bedienung der Eingabeschnittstelle erfolgt. Im Gegensatz zum Stand der Technik, bei welchem eine Datenbank weitgehend automatisiert erzeugt wird, ermöglicht die vorgesehene manuelle Bedienung der Eingabeschnittstelle ein bewusstes Kommunizieren der Zusatzinformation vonseiten eines Benutzers.

Insbesondere ist es möglich über den manuellen Zwischenschritt eine Einverständniserklärung des Benutzers zur Verwendung der Zusatzinformation einzuholen, beispielsweise im Falle einer manuellen Eingabe über die geöffnete Webseite in Form eines Anklickens eines Kontrollkästchens. Auch ist eine Informierung des Benutzers vor dem Auflegen des Barcodes auf der Scanfläche möglich.

Im Anschluss an die Eingabe der Zusatzinformation wird eine Datenstruktur erstellt, in welcher die Zusatzinformation dem Identifikationsparameter zugeordnet wird. Die Datenstruktur ist vorzugsweise in Form eines Datensatzes ausgebildet, kann aber auch in Form eines Arrays oder einer verketteten Liste ausgebildet sein. In der Datenstruktur können dem Identifikationsparameter auch mehrere Zusatzinformationen zugeordnet sein. Darauffolgend wird die Datenstruktur in einer Datenbank abgespeichert. Vorzugsweise wird die Datenbank auf einem Datenbankserver gespeichert. In einer besonderen Ausführungsform ist der Datenbankserver mit dem ersten Scanner verbunden und der vom ersten Scanner empfangene Identifikationsparameter wird vom ersten Scanner an den Datenbankserver übertragen.

Die Zusatzinformation wird vorteilhafterweise von der Eingabeschnittstelle aus an den Datenbankserver übertragen. Weiterhin wird bevorzugt ein Zeitpunkt des Empfangs der Zusatzinformation oder ein Zeitpunkt des Absendens der Zusatzinformation einem Registrierungszeitpunkt und/oder einem Registrierungszeitfenster zugeordnet. In einer vorteilhaften Ausgestaltung des Verfahrens wird bevorzugt ein Zeitpunkt, an welchem der Identifikationsparameter mittels des Datenbankservers oder mittels des ersten Scanners empfangenen wird, einem Identifizierungszeitpunkt und/oder einem Identifizierungszeitfenster zugeordnet. Der Identifizierungszeitpunkt und/oder das Identifizierungszeitfenster wird mit dem Registrierungszeitpunkt und/oder einem Registrierungszeitfenster verglichen. Überschneiden sich der Identifizierungszeitpunkt und/oder das Identifizierungszeitfenster mit dem Registrierungszeitpunkt und/oder dem Registrierungszeitfenster, so wird dem Identifikationsparameter mit dem verglichenen Identifizierungszeitpunkt bzw. dem Identifizierungszeitfenster die Zusatzinformation mit dem verglichenen Registrierungszeitpunkt bzw. dem verglichenen Registrierungszeitfenster zugeordnet.

Eine besonders bevorzugte Variante sieht vor, dass mittels des Datenbankservers ein erster Identifikationsparameter empfangen wird, im Anschluss daran auf ein Empfangen der Zusatzinformation gewartet wird und darauffolgend ein zweiter Identifikationsparameter empfangen wird und der erste Identifikationsparameter mit dem zweiten Identifikationsparameter verglichen wird. Ist der erste Identifikationsparameter identisch zu dem zweiten Identifikationsparameter, wird dem ersten Identifikationsparameter die empfangene Zusatzinformation zugeordnet. Diese spezielle Ausgestaltung des Verfahrens hat den Vorteil, dass ein Identifizierungszeitpunkt bzw. ein Identifizierungszeitfenster nicht mit einem Registrierungszeitpunkt bzw. mit einem Registrierungszeitfenster verglichen werden muss.

In einer besonders vorteilhaften Ausführungsform wird mittels des ersten Scanners der empfangene Identifikationsparameter an die Registrierungseinheit übermittelt. So kann beispielsweise der QR-Code und/oder der NFC-Tag den Identifikationsparameter enthalten und an einen Contentserver der geöffneten Webseite übertragen. Dies hat den Vorteil, dass eine Zuordnung des Identifikationsparameters zu der Zusatzinformation auf dem Contentserver der Webseite durchgeführt werden kann und eine derart erstellte Datenstruktur an den Datenbankserver übermittelt werden kann. Auch in diesem Fall braucht ein zeitlicher Versatz zwischen dem Empfangen des Identifikationsparameters und der Eingabe der Zusatzinformation nicht berücksichtigt zu werden.

Die oben genannten Ausgestaltungen des Verfahrens sind insbesondere verwendbar, wenn der erste Scanner über einen Registrierungszeitraum, welcher mit dem Einbringen des Mobilgerätes in den Empfangsbereich des ersten Scanners beginnt und mit dem Erstellen der Datenstruktur endet, lediglich den Identifikationsparameter des Mobilgerätes empfängt und keinen weiteren Identifikationsparameter eines weiteren Mobilgerätes empfängt.

Für den Fall, dass der erste Scanner zumindest einen weiteren Identifikationsparameter eines weiteren Mobilgerätes empfängt, ist eine Identifizierung des Mobilgerätes als ein Nächstnachbarmobilgerät der Registrierungseinheit vorteilhaft, um mit einer hohen Wahrscheinlichkeit unter allen Mobilgeräten mit einem jeweiligen Identifikationsparameter das Mobilgerät als dasjenige Mobilgerät zu erfassen, welches von einem Benutzer getragen wird, welcher die Eingabeschnittstelle manuell bedient. Der weitere Identifikationsparameter des weiteren Mobilgerätes kann zum Beispiel von einem Benutzer getragen werden, welcher gar nicht die Eingabeschnittstelle manuell bedient.

Eine Identifizierung des Mobilgerätes als Nächstnachbarmobilgerät der Registrierungseinheit kann beispielsweise derart erfolgen, dass innerhalb des Registrierungszeitraumes jedem unterschiedlichen empfangenen Identifikationsparameter eine jeweilige identifikationsparameterspezifische Kennzahl zugeordnet wird, wobei die unterschiedlichen Identifikationsparameter von allen in dem Empfangsbereich des ersten Scanners befindlichen Mobilgeräten ausgesendet und vom ersten Scanner empfangen werden. Die identifikationsparameterspezifische Kennzahl kann beispielsweise eine Anzahl empfangener Datenpakete sein, welche denselben Identifikationsparameter aufweisen. Weiterhin kann die identifikationsparameterspezifische Kennzahl auch eine durchschnittliche gemessene Empfangsfeldstärke eines jeden Datenpaketes, welches denselben Identifikationsparameter aufweist, sein. Eine weitere Ausgestaltung sieht vor, dass die identifikationsparameterspezifische Kennzahl eine gemessene maximale Empfangsfeldstärke aller Datenpakete, welche denselben Identifikationsparameter aufweisen, ist.

Die Identifizierung des Mobilgerätes als Nächstnachbarmobilgerät sieht bevorzugt vor, dass das Mobilgerät dasjenige ist, dessen ausgesendeter Identifikationsparameter die höchste zugeordnete identifikationsparameterspezifische Kennzahl hat. Diese Ausgestaltung des Verfahrens funktioniert besonders gut, wenn der erste Scanner weniger als 20 cm von der Registrierungseinheit beabstandet ist. Besonders vorteilhaft kann vorgesehen sein, dass die Erstellung der Datenstruktur nur vorgenommen wird, wenn das Mobilgerät als Nächstnachbarmobilgerät der Registrierungseinheit identifiziert wurde.

Bei einer Verwendung des NFC-Tags oder des QR-Codes als Registrierungseinheit ist vorgesehen, dass das Mobilgerät mit der Registrierungseinheit in elektromagnetischer bzw. optischer Weise kommuniziert. Dies hat den Vorteil, dass das Mobilgerät sehr nah, d.h. ungefähr weniger als 5 cm, an die Registrierungseinheit gehalten wird, um das vorgeschlagene Verfahren zur Erstellung der Datenbank durchzuführen. Dieser dadurch erzeugte nahe Abstand zwischen dem Mobilgerät und der Registrierungseinheit erleichtert in erheblichen Maße eine eindeutige Identifizierung des Mobilgerätes als Nächstnachbarmobilgerät. In einer besonderen Ausführungsform ist das Verfahren ein passives Verfahren, bei welchem die von dem Mobilgerät ausgesendeten Signale mittels des ersten Scanners empfangen werden und das Mobligerät nicht von dem ersten Scanner angefunkt wird.

In einer bevorzugten Ausführungsform weist der erste Scanner eine Antenne auf, welche als Richtantenne ausgeführt ist und von einer Hauptempfangsrichtung des ersten Scanners empfängt. So kann der Öffnungswinkel der Antenne beispielsweise in einem Bereich von 1 bis 10 Grad, in einer weiteren Ausführungsform von 11 bis 30 Grad liegen. Insbesondere kann die Antenne des ersten Scanners als eine Empfangsantenne ausgebildet sein, welche mittels des ersten Scanners nicht als Sendeantenne betreibbar ist. Dies hat den Vorteil, dass mittels des ersten Scanners nur ein passives Verfahren durchgeführt werden kann, bei welchem das Mobilgerät nicht vom ersten Scanner angefunkt wird.

In einer davon unabhängigen Ausführungsform aber auch in Kombination kann die Antenne des ersten Scanners gedämpft sein. Vorzugsweise ist die Antenne des ersten Scanners derart gedämpft, dass sich der Empfangsbereich zum Empfangen eines Datenpaketes, welches vom Mobilgerät ausgesendet wird und den Identifikationsparameter enthält, bis zu einem Maximalabstand vom ersten Scanner erstreckt, wobei der Maximalabstand in einer Ausführungsform 10 cm, in einer weiteren Ausführungsform 20 cm, in einer davon unabhängigen Ausführungsform 30 cm und in einer weiteren Ausgestaltung 50 cm beträgt.

Die Ausführungsform des beanspruchten Verfahrens mit dem ersten Scanner, welcher eine Richtantenne und insbesondere eine gedämpften Richtantenne aufweist, hat den Vorteil, dass in der Hauptempfangsrichtung des ersten Scanners nur wenige Datenpakete mit den jeweils weiteren Identifikationsparametern der weiteren Mobilgeräte in der Umgebung des ersten Scanners mittels des ersten Scanners empfangen werden können. Insbesondere können in dieser Ausgestaltung des ersten Scanners nur Datenpakete mit dem Identifikationsparameter des Mobilgerätes empfangen werden, wobei sich das Mobilgerät näher an dem ersten Scanner befindet als die weiteren Mobilgeräte. Dieser Vorteil kann sogar noch leichter erreicht werden, wenn das Mobilgerät auf die oben beschriebene Auflage gelegt wird, welche einen vorgegebenen maximalen Abstand, von zum Beispiel 5 cm, 10 cm, 15 cm oder 20 cm, zum ersten Scanner aufweist.

Eine besonders vorteilhafte Weiterbildung des Verfahrens sieht vor, dass das Mobilgerät den Identifikationsparameter in einem Rahmen der durch das Mobilgerät in einem normalen Betrieb regelmäßig ausgesendeten Meldungen aussendet. Ein normaler Betrieb des Mobilgerätes sieht beispielsweise vor, mittels Bluetooth- oder WLAN-Funktechnik nach anderen Geräten in der Umgebung des Mobilgerätes zu suchen. Die dabei ausgesendeten Meldungen enthalten bevorzugt den Identifikationsparameter. Dies hat den Vorteil, dass in regelmäßigen Abständen Signale des Mobilgerätes, welche den Identifikationsparameter enthalten, vom ersten Scanner empfangen werden können.

Eine vorteilhafte Ausführungsform sieht vor, dass das Mobilgerät den Identifikationsparameter mittels einer Funktechnik, insbesondere mittels Bluetooth- oder WLAN-Funktechnik, versendet, bei welcher jedes von dem Mobilgerät versendete Datenpaket den Identifikationsparameter aufweist.

In einer vorteilhaften Ausgestaltung ist vorgesehen, dass die Registrierungseinheit in der Hauptempfangsrichtung des ersten Scanners angeordnet ist. Weiterhin vorteilhaft befindet sich die Registrierungseinheit in einer Entfernung von weniger als einem halben Meter von dem ersten Scanner. Dies hat den Vorteil, dass sich im Wesentlichen nur eine Person, und insbesondere das Mobilgerät als einziges Mobilgerät, vor dem ersten Scanner in der Hauptempfangsrichtung des ersten Scanners befindet, wenn eine manuelle Bedienung der Eingabeschnittstelle erfolgt. In einer besonders vorteilhaften Ausführung beträgt die Entfernung der Registrierungseinheit von dem ersten Scanner weniger als 40 cm, in einer weiteren Ausgestaltung weniger als 30, in einer davon verschiedenen Ausführungsform weniger als 20 und in einer weiteren Variante weniger als 10 cm. Je kleiner diese Entfernung ist, desto sicherer kann mittels des ersten Scanners der Identifikationsparameter des Mobilgerätes, welches dem Benutzer der Eingabeschnittstelle zugeordnet werden kann, von den weiteren Identifikationsparametern der weiteren Mobilgeräte, welche sich in dem Empfangsbereich des ersten Scanners befinden, unterschieden werden.

Eine NFC-Übertragung hat im Vergleich zu einer Bluetooth- oder WLAN-Übertragung eine sehr viel kürzere Reichweite von ungefähr maximal 10 cm bis 20 cm. Eine Verwendung des NFC-Tags als Registrierungseinheit in Kombination mit einem maximalen Abstand von ungefähr 5 cm der Registrierungseinheit von dem ersten Scanner hat daher den Vorteil, dass in einem Wirkungsbereich, in welchem der NFC-Tag mit dem Mobilgerät interagieren kann, mittels des ersten Scanners das Mobilgerät besonders leicht als Nächstnachbarmobilgerät identifiziert werden kann. Ist darüber hinaus die Antenne des ersten Scanners gedämpft, vorzugsweise derart gedämpft, dass der oben beschriebene Maximalabstand 10 cm beträgt, können in dem Wirkungsbereich, in welchem der NFC-Tag mit dem Mobilgerät interagieren kann, im Wesentlichen nur ein einziges Mobilgerät mittels des ersten Scanners erfasst und nur Datenpakete mit dem Identifikationsparameter des Mobilgerätes empfangen werden, wobei das Mobilgerät dem Benutzer der Registrierungseinheit zugeordnet werden kann.

Im Rahmen einer besonders bevorzugten Variante ist vorgesehen, dass die Zusatzinformation eine personenbezogene Information umfasst und diese in der Datenstruktur abgespeichert wird. So kann die Zusatzinformation beispielsweise ein Alter, eine Größe, ein ausgeübter Beruf, eine Anschrift, eine Emailadresse, eine persönliche Neigung und/oder ein in Kennzahlen angegebenes Verhaltensmuster, Aussehen und/oder Denkmuster einer Person sein.

Eine weitere Ausgestaltung sieht vor, dass die Zusatzinformation eine objektbezogene Information umfasst und diese in der Datenstruktur abgespeichert wird. So kann die Zusatzinformation eine Produktkategorie, eine Bezahlungsweise und/oder eine Anzahl von Produkten umfassen.

Darüber hinaus liegt es im Rahmen der Erfindung, dass das Mobilgerät in einem Mobilfunknetz mit einem ersten Funkstandard betreibbar ist und ein von dem Mobilgerät versendetes Datenpaket von dem ersten Scanner über ein weiteres Funknetz empfangen wird, wobei das weitere Funknetz einen vom ersten Funkstandard verschiedenen zweiten Funkstandard aufweist. Eine vorteilhafte Ausführungsform sieht vor, dass der zweite Funkstandard ein Bluetooth-Standard oder ein WLAN-Standard ist.

Darüber hinaus liegt es im Rahmen der Erfindung, dass das Mobilgerät ohne eine Einflussnahme durch den ersten Scanner auf das Mobilgerät als Nächstnachbarmobilgerät der Registrierungseinheit identifiziert wird und insbesondere ohne dass das Mobilgerät und der erste Scanner in einem selben Telekommunikationsnetz eingebucht sind oder dass auf dem Mobilgerät eine bestimmte Applikation installiert sein muss.

Eine Weiterbildung sieht vor, dass zum Empfangen des Identifikationsparameters eine Empfangsfeldstärke des Mobilgerätes gemessen wird. Insbesondere kann hierbei die Empfangsfeldstärke eines Signals erfasst werden, welches ein Datenpaket mit dem Identifikationsparameter aufweist. Dabei kann der erste Scanner besonders vorteilhaft auf eine Empfangsfeldstärkendatenbank zurückgreifen, in welcher bestimmte maximale Empfangsfeldstärken einem bestimmten Mobilgerätetyp zugeordnet sind.

Besonders vorteilhaft erfasst der erste Scanner eine Empfangsfeldstärkeänderung über der Zeit. Diese Variante hat den Vorteil, dass das Mobilgerät, welches in den Empfangsbereich des ersten Scanners bewegt wurde, sich bei der manuellen Bedienung der Eingabeschnittstelle in unmittelbarer Nähe der Registrierungseinheit befindet und bei der manuellen Bedienung der Eingabeschnittstelle in den meisten Fällen wenig bewegt wird und Signale aussendet, welche eine geringe Empfangsfeldstärkenänderung über der Zeit haben, von einem weiteren Mobilgerät, welches sich nicht in unmittelbarer Nähe zu der Registrierungseinheit befindet, leichter unterschieden werden kann. Die Erfassung der Empfangsfeldstärkeänderung über der Zeit kann beispielsweise bei der Identifizierung des Mobilgerätes als Nächstnachbarmobilgerät der Registrierungseinheit mit einfließen.

Insbesondere kann vorgesehen sein, dass der erste Scanner nach einer Abfolge von mehreren starken Empfangsfeldstärkeänderungen eines vom Mobilgerät ausgesendeten Signals, welches ein Datenpaket mit dem Identifikationsparameter aufweist, gefolgt von einer Abfolge von mehreren sehr geringen Empfangsfeldstärkeänderungen bzw. einer kaum erfassbaren Empfangsfeldstärkeänderung des vom Mobilgerät ausgesendeten Signals, welches ein Datenpaket mit dem Identifikationsparameter aufweist, das Mobilgerät als Nächstnachbarmobilgerät der Registrierungseinheit identifiziert.

In einer Weiterbildung des Verfahrens kann der mittels des vom ersten Scanner empfangenen Identifikationsparameter eine Vergleichsgeräteinformation mit einer während der manuellen Bedienung der Eingabeschnittstelle übermittelten Geräteinformation, welche beispielsweise eine Information über einen Typ des Mobilgerätes, einen Hersteller des Mobilgerätes und/oder über ein Betriebssystem des Mobilgerätes sein kann, verglichen werden. Eine Übermittlung der Geräteinformation, insbesondere mittels eines vom Mobilgerät genutzten Webbrowsers, kann bevorzugt während einer manuellen Bedienung einer Webseite als Eingabeschnittstelle vorgesehen sein. Mittels einer Mobilgerätedatenbank kann anhand des mittels des ersten Scanners empfangenen Identifikationsparameters zumindest die Vergleichsgeräteinformation des Mobilgerätes, d.h. zumindest der Typ des Mobilgerätes, der Hersteller des Mobilgerätes und/oder das Betriebssystem des Mobilgerätes ermittelt werden. Die Mobilgerätedatenbank weist bevorzugt eine Zuordnung von zumindest mehreren MAC-Adressen zu zumindest jeweils einen Typ eines Mobilgerätes, einen Hersteller eines Mobilgerätes und/oder eines Betriebssystem eines Mobilgerätes auf. Die Mobilgerätedatenbank kann auf dem ersten Scanner, auf dem Datenbankserver oder auf einem weiteren mit dem ersten Scanner verbundenen Geräte gespeichert sein.

Die über den Identifikationsparameter ermittelte Vergleichsgeräteinformation wird mit der während der manuellen Bedienung der Eingabeschnittstelle übermittelten Geräteinformation verglichen und im Falle einer Übereinstimmung, beispielsweise bezüglich des Herstellers des Mobilgerätes, eine Plausibilitätsprüfung dergestalt vorgenommen, dass weitere in der Nähe der Registrierungseinheit befindliche Mobilgeräte herausgefiltert und im weiteren Verfahren ignoriert werden, sofern deren über den Identifkationsparameter und der Mobilgerätedatenbank ermittelte Vergleichsgeräteinformation nicht mit der während der manuellen Bedienung der Eingabeschnittstelle übermittelten Geräteinformation übereinstimmt. Die Plausibilitätsprüfung kann besonders vorteilhaft bei der Identifizierung des Mobilgerätes als Nächstnachbarmobilgerät der Registrierungseinheit durchgeführt werden.

Mittels der Messung der Empfangsfeldstärke des Mobilgerätes, welche vom ersten Scanner erfasst wird, kann weiterhin eine Entfernung des Mobilgerätes zum ersten Scanner ermittelt werden. Besonders vorteilhaft kann ein weiterer Scanner verwendet werden, welcher beabstandet vom ersten Scanner, bevorzugt mehr als zwei Meter, angeordnet ist, die Empfangsfeldstärke des Mobilgerätes ermittelt und bevorzugt als Rundstrahler ausgeführt ist. Die jeweiligen vom ersten Scanner und dem weiteren Scanner ermittelten Empfangsfeldstärken des Mobilgerätes werden bevorzugt an einen Datenbankserver übermittelt und dort ausgewertet und jeweils eine Entfernung des Mobilgerätes vom ersten Scanner und vom weiteren Scanner ermittelt. Über die jeweiligen Entfernungen des Mobilgerätes von den beiden Scannern wird das Mobilgerät in Bezug zur Registrierungseinheit geortet.

Eine solche Ortung erfolgt bevorzugt für die weiteren Mobilgeräte, welche sich im Empfangsbereich des ersten Scanners und des weiteren Scanners befinden. Ergibt das Ergebnis einer Ortung für das Mobilgerät und die weiteren Mobilgeräte, dass sich das Mobilgerät im Vergleich zu den weiteren Mobilgeräten am nächsten an der Registrierungseinheit befindet, wird das Mobilgerät Nächstnachbarmobilgerät der Registrierungseinheit identifiziert.

Die Registrierungseinheit weist insbesondere beim Durchführen einer Empfangsfeldstärkemessung bevorzugt einen festen Abstand zum ersten Scanner auf. Dies hat den Vorteil, dass insbesondere in dem Moment, in welchem das Mobilgerät mit der Registrierungseinheit kommuniziert, beispielsweise bei Verwendung des NFC-Tags oder des QR-Codes als Registrierungseinheit, eine Abschwächung einer Empfangsfeldstärke eines Funkfeldes des Mobilgerätes ausgehend vom Mobilgerät bis hin zum ersten Scanner nahezu immer gleichartig ist. Dies ermöglicht insbesondere, dass der erste Scanner auf eine Datenbank zurückgreifen kann, in welcher bestimmte maximale Empfangsfeldstärken einem bestimmten Mobilgerätetyp zugeordnet sind. Somit können zum Beispiel Signale, welche maximale Empfangsfeldstärken aufweisen, welche nicht in der Datenbank enthalten sind, ausgeschlossen werden, womit eine Erfassung des Mobilgerätes als Mobilgerät, welches sich am nächsten an der Registrierungseinheit befindet, erleichtert wird. Des Weiteren kann dadurch eine Zuordnung des empfangenen Identifikationsparameters zu einem speziellen Hersteller von Mobilgeräten erleichtert werden.

Eine besonders vorteilhafte Weiterbildung des beanspruchten Verfahrens sieht vor, dass zumindest ein zweiter Scanner mit einem Empfangsbereich verwendet wird, wobei der zweite Scanner eine Antenne aufweist, welche als Rundstrahler ausgebildet ist und das Mobilgerät in den Empfangsbereich des zweiten Scanners eingebracht wird. Des Weiteren wird mittels des Mobilgerätes der Identifikationsparameter ausgesendet und der Identifikationsparameter vom zweiten Scanner empfangen. Anhand des Identifikationsparameters wird das Mobilgerät identifiziert, vorzugsweise mittels des zweiten Scanners. Anschließend wird auf die Datenbank zugegriffen und die Datenstruktur ausgelesen, welche den Identifikationsparameter des Mobilgerätes aufweist. Anhand der Zusatzinformation der ausgelesenen Datenstruktur wird eine Kategorisierung des Mobilgerätes durchgeführt und in Abhängigkeit der erfolgten Kategorisierung eine Nachricht an das Mobilgerät gesendet. Vorzugsweise wird die Nachricht unmittelbar, d.h. in Echtzeit, nach der Kategorisierung an das Mobilgerät gesendet.

Diese Weiterbildung des Verfahrens ermöglicht eine Wiedererkennung des Mobilgerätes und auch eine Wiedererkennung eines Benutzers des Mobilgerätes. Beispielsweise kann die Zusatzinformation einen Beruf enthalten, welcher dem Identifikationsparameter und damit bevorzugt dem Mobilgerät zugeordnet ist. Im Falle eines medizinischen Notfalls kann beispielsweise die Kategorisierung derart erfolgen, dass überprüft wird, ob der unter der Zusatzinformation enthaltene Beruf ein Arztberuf ist. Ist dies der Fall, so wird das Mobilgerät zu den Mobilgeräten kategorisiert, welche Nachricht, beispielsweise eine SMS, erhalten, wobei insbesondere eine Telefonnummer des Mobilgerätes als eine weitere Zusatzinformation, welche bevorzugt in der ausgelesenen Datenstruktur enthalten ist, verwendet. Im Anschluss daran wird an das Mobilgerät eine Nachricht, bevorzugt eine SMS, geschickt, vorzugsweise mit den Daten über einen Ort und eine Art des medizinischen Notfalls. Weiterhin ist möglich, anhand des Mobilgerätes einen wiederkehrenden Benutzer des Mobilgerätes zu ermitteln, welcher eine Umgebung des ersten Scanners wiederholt betritt. An den wiederkehrenden Benutzer können über das Mobilgerät bevorzugt Nachrichten über Produktinformationen gesendet werden.

In einer besonderen Ausgestaltung kann der zweite Scanner in einer Entfernung von mehr als 10 oder 100 Metern vom ersten Scanner angeordnet sein. In diesem Fall kann dem wiederkehrenden Benutzer mittels einer Nachricht an das Mobilgerät eine Richtung mitgeteilt werden, in welcher sich der erste Scanner von dem Mobilgerät aus befindet.

Die Kategorisierung kann in einer weiteren Ausgestaltung derart erfolgen, dass anhand der Zusatzinformation ein Mobilgerätehersteller ermittelt wird. In Abhängigkeit des ermittelten Mobilgeräteherstellers wird bevorzugt eine auf das Mobilgerät angepasste Nachricht versendet.

Des weiteren wird ein System zum Erstellen einer Datenbank mit einem Mobilgerät, welches einen Identifikationsparameter aussendet vorgeschlagen. Das System weist eine Eingabeschnittstelle, eine Registrierungseinheit und einen ersten Scanner mit einem Empfangsbereich auf. Weiterhin ist das Mobilgerät in den Empfangsbereich des ersten Scanners einbringbar und der Identifikationsparameter mittels des ersten Scanners empfangbar. Die Registrierungseinheit weist einen Zugang zur Eingabeschnittstelle auf, wobei eine Zusatzinformation manuell über die Eingabeschnittstelle eingebbar ist und mittels des Systems eine Datenstruktur erstellbar ist, in welcher die Zusatzinformation dem Identifkationsparameter zugeordnet ist, und die Datenstruktur in einer Datenbank speicherbar ist.

Eine vorteilhafte Ausgestaltung des Systems sieht vor, dass das System einen zweiten Scanner mit einem Empfangsbereich aufweist, wobei der zweite Scanner eine Antenne aufweist, welche als Rundstrahler ausgebildet ist. Das Mobilgerät ist in den Empfangsbereich des zweiten Scanners einbringbar und der Identifikationsparameter vom zweiten Scanner empfangbar. Die Datenstruktur, welche den Identifikationsparameter des Mobilgerätes aufweist, ist mittels Zugriffes auf die Datenbank auslesbar. Das Mobilgerät ist anhand der Zusatzinformation der ausgelesen Datenstruktur kategorisierbar und weiterhin ist mittels des Systems in Abhängigkeit einer erfolgten Kategorisierung eine Nachricht an das Mobilgerät versendbar.

Weitere Vorteile, Merkmale und Einzelheiten der Erfindung ergeben sich aus der nachfolgenden Beschreibung zumindest eines bevorzugten Ausführungsbeispiels, auf die die Erfindung jedoch nicht beschränkt ist, sowie anhand der Figuren.

Diese zeigen in:
- Fig. 1: ein System mit einem Mobilgerät, einem ersten Scanner mit einem Empfangsbereich und einer Registrierungseinheit;
- Fig. 2: einzelne Schritte eines Verfahrens zur Erstellung einer Datenbank mit einem Mobilgerät, einer Eingabeschnittstelle und einem Identifikationsparameter;
- Fig. 3: ein Ausschnitt des Systems von Fig. 1 mit einem zweiten Scanner;
- Fig. 4: einzelne Schritte eines Verfahrens zur Versendung einer Nachricht an das Mobilgerät aus Fig. 1;
- Fig. 5: eine abgewandelte Ausführungsform des Systems aus Fig. 1.

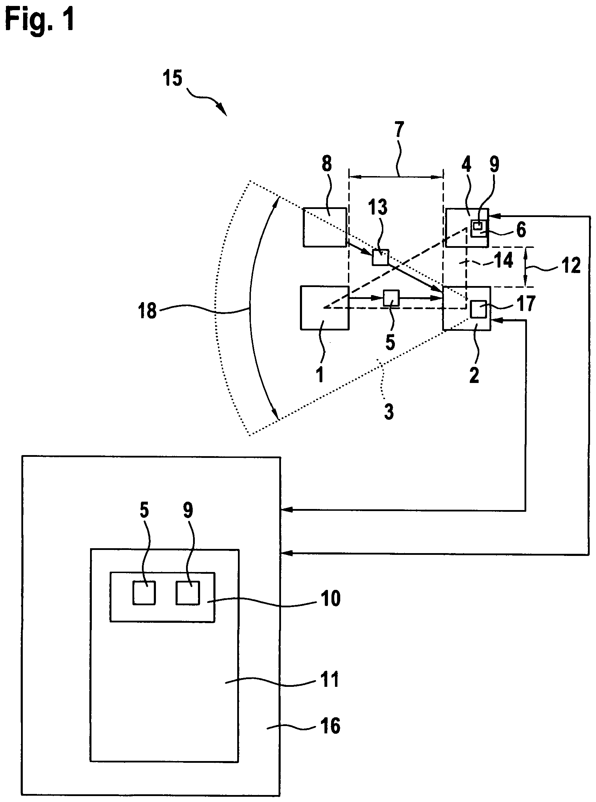

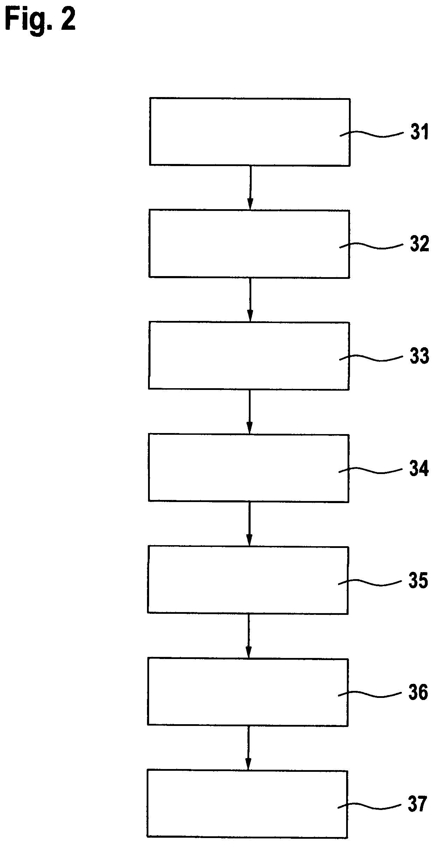

Fig. 1 zeigt ein System 15 mit einem Mobilgerät 1, einem ersten Scanner 2 mit einem Empfangsbereich 3 und einer Registrierungseinheit 4. Fig. 2 zeigt die einzelnen Schritte des vorgeschlagenen Verfahrens. Das vorgeschlagene Verfahren sieht vor, dass in einem ersten Schritt 31 das Mobilgerät 1 in den Empfangsbereich 3 des ersten Scanners 2 eingebracht wird. Das Mobilgerät 1 befindet sich danach in einem Abstand 7 von dem ersten Scanner 2, wobei der Abstand 7 vorzugsweise geringer als 40 cm ist. In einem zweiten Schritt 32 wird mittels des Mobilgerätes 1 ein Identifikationsparameter 5 ausgesendet und in einem dritten Schritt 33 der Identifikationsparameter 5 vom ersten Scanner 2 empfangen. In einem vierten Schritt 34 wird mittels der Registrierungseinheit 4 ein Zugang zur Eingabeschnittstelle 6 bereitgestellt Die Eingabeschnittstelle 6 ist in dieser Ausführungsform ein Bildschirm mit einer Berührungseingabe, wobei der Bildschirm zur Registrierungseinheit 4 gehört. Die Registrierungseinheit 4 befindet sich in einem Abstand 12 von dem ersten Scanner 2, wobei der Abstand 12 vorzugsweise geringer als 20 cm ist. In einem fünften Schritt 35 erfolgt eine manuelle Bedienung der Eingabeschnittstelle 6. Bei dieser manuellen Bedienung wird eine Eingabe von zumindest einer Zusatzinformation 9 durchgeführt. Zum Beispiel kann als Zusatzinformation 9 ein Beruf eines Benutzers des Mobilgerätes 1 eingegeben werden. In einem sechsten Schritt 36 wird eine Datenstruktur 10 erstellt, in welcher die Zusatzinformation 9 dem Identifikationsparameter 5 zugeordnet wird. In einem siebten Schritt 37 wird die Datenstruktur 10 in einer Datenbank 11 gespeichert, welche auf einem Datenbankserver 16 gespeichert wird. Der Datenbankserver 16 kommuniziert mit dem ersten Scanner 2 und der Registrierungseinheit 4.

In dem in Fig. 1 gezeigten Ausführungsbeispiel hat der erste Scanner 2 eine Antenne 17, welche als Richtantenne ausgebildet ist und gedämpft ist. Die Ausführungsform mit einer Richtantenne bewirkt, dass der Empfangsbereich 3 des ersten Scanners 2 einen begrenzten Öffnungswinkel 18 hat. Vorzugsweise beträgt der Öffnungswinkel 10 bis 20 Grad. Der erste Scanner 2 detektiert den von dem Mobilgerät 1 ausgesandten Identifikationsparameter 5 als Identifikationsparameter 5 des Mobilgerätes 1. Dies kann zum Beispiel dadurch realisiert werden, dass ein zeitlicher Verlauf einer Empfangsfeldstärke und/oder einer Änderung der Empfangsfeldstärke eines Signals, welches den Identifikationsparameter 5 von dem Mobilgerät 1 zu dem ersten Scanner 2 transportiert, mittels des ersten Scanners 2 gemessen wird. Bevorzugt wird ebenso ein zeitlicher Verlauf einer Empfangsfeldstärke und/oder einer Änderung der Empfangsfeldstärke eines Signals, welches einen weiteren Identifikationsparameter 13 von einem weiteren Mobilgerät 8 zu dem ersten Scanner 2 transportiert, mittels des ersten Scanners 2 gemessen. Während der manuellen Bedienung der Eingabeschnittstelle 6 befindet sich das Mobilgerät 1 näher an dem ersten Scanner 2 als das weitere Mobilgerät 8. Dies wird insbesondere dadurch erreicht, dass sich die Registrierungseinheit 4 mit der Eingabeschnittstelle 6 in dem Abstand 12 von weniger als 20 cm von dem ersten Scanner 2 befindet und das Mobilgerät 1 sich in dem Abstand 7 von weniger als 40 cm von dem ersten Scanner 2 befindet. Das Mobilgerät 1, die Registrierungseinheit 4 und der erste Scanner 2 sind bei der manuellen Bedienung der Eingabeschnittstelle 6 bevorzugt derart zueinander angeordnet, dass zwischen dem Mobilgerät 1, der Registrierungseinheit 4 und dem ersten Scanner 2 ein Raum 14 gebildet ist, welcher insbesondere kleiner ist als eine Person zum Verweilen im Stehen benötigt.

Somit kann ermöglicht werden, dass während der Bedienung der Eingabeschnittstelle 6 die Empfangsfeldstärke des Signals, welches den Identifikationsparameter 5 von dem Mobilgerät 1 zu dem ersten Scanner 2 transportiert, von dem ersten Scanner 2 als höher erfasst wird als die Empfangsfeldstärke des Signals, welches den weiteren Identifikationsparameter 13 von dem weiteren Mobilgerät 8 zu dem ersten Scanner 2 transportiert. Dies gilt insbesondere für den Fall, dass das Mobilgerät 1 eine vergleichbare Sendeleistung wie das weitere Mobilgerät 8 aufweist.

Der durch die Anordnung des Mobilgerätes 1, der Registrierungseinheit 4 und des ersten Scanners 2 gebildete Raum 14 ermöglicht auch, dass durch einen vergleichsweise langen Aufenthalt des Mobilgerätes 1 innerhalb des Raumes 14 gegenüber einem insbesondere kurzen Aufenthalt des weiteren Mobilgerätes 8 außerhalb des Raumes 14 das Mobilgerät 1 von dem weiteren Mobilgerät 8 unterschieden werden kann und eine eindeutige Zuordnung zu dem von dem Mobilgerät 1 ausgesendeten Identifikationsparameter 5 zu einem Benutzer, welcher die Eingabeschnittstelle 6 manuell bedient, erfolgen kann.

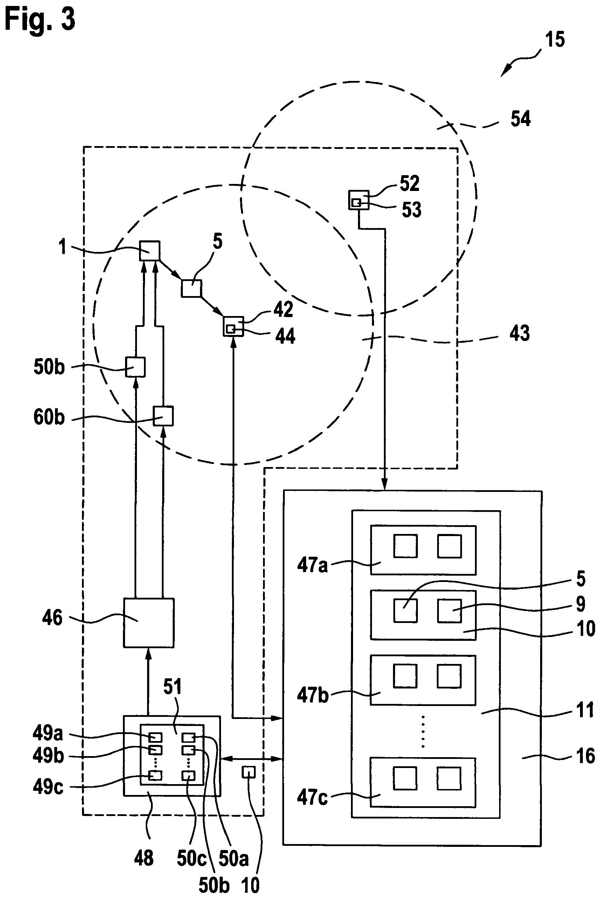

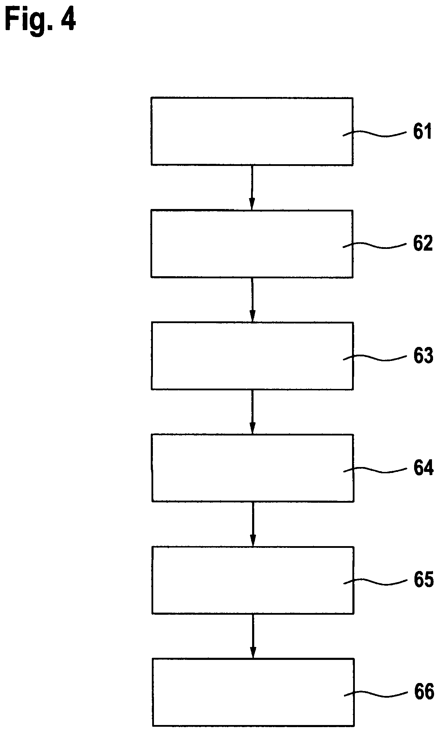

Fig. 3 zeigt ein Ausschnitt des Systems 15 mit einem zweiten Scanner 42 mit einem Empfangsbereich 43, einer Sendeeinheit 46 und einem Computer 48. Der zweite Scanner 42 weist eine Antenne 44 auf, welche als Rundstrahler ausgebildet ist. Anhand der Fig. 3 soll ein Verfahren zur Versendung einer Nachricht an das Mobilgerät 1 beschrieben werden, welches sich an das in Fig. 2 und Fig. 1 beschriebene Verfahren anschließt. Der Ablauf der einzelnen Verfahrensschritte ist in Fig. 4 dargestellt. In einem achten Schritt 61 wird das Mobilgerät 1 in den Empfangsbereich 43 des zweiten Scanners 42 gebracht. In einem neunten Schritt 62 wird mittels des Mobilgerätes 1 der Identifikationsparameter 5 ausgesendet. Weiterhin ist vorgesehen, dass in einem zehnten Schritt 63 der Identifikationsparameter 5 von dem zweiten Scanner 42 empfangen wird, in einem elften Schritt 64 auf die Datenbank 11, welche auf dem Datenbankserver 16 gespeichert ist, zugegriffen wird und die Datenstruktur 10 ausgelesen wird, welche den Identifikationsparameter 5 des Mobilgerätes 1 aufweist. Dabei überträgt bevorzugt der zweite Scanner 42 den empfangenen Identifikationsparameter 5 an den Datenbankserver 16. Insbesondere wird die Datenstruktur 10, welche den Identifikationsparameter 5 des Mobilgerätes 1 enthält, aufgrund des Identifikationsparameters 5 von weiteren Datenstrukturen 47a, 47b und 47c, welche in der Datenbank 11 gespeichert sind und nicht den Identifikationsparameter 5 enthalten, unterschieden. In einem zwölften Schritt 65 wird anhand der Zusatzinformation 9 der ausgelesenen Datenstruktur 10 eine Kategorisierung des Mobilgerätes 1 durchgeführt. In einem dreizehnten Schritt 66 wird in Abhängigkeit der erfolgten Kategorisierung eine Nachricht 50b an das Mobilgerät 1 gesendet.

Die Kategorisierung des Mobilgerätes 1 erfolgt auf dem Computer 48, wobei die Datenstruktur 10 von dem Datenbankserver 16 an den Computer 48 übermittelt wird und mittels des Computers 48 die Zusatzinformation 9 mit Referenzwerten 49a, 49b und 49c verglichen und zumindest einem dieser Referenzwerte zugeordnet wird. Zu jedem der Referenzwerte 49a, 49b und 49c sind jeweils verschiedene Nachrichten 50a, 50b und 50c zugeordnet, wobei diese Zuordnung in einer Referenzdatenbank 51 abgespeichert ist. In einem Anwendungsbeispiel kann die Zusatzinformation 9 eine Angabe eines Berufes sein, beispielsweise ein Wort wie Allgemeinarzt aufweisen. Der Referenzwert 49b kann in diesem Anwendungsbeispiel das Wort Arzt aufweisen, der Referenzwert 49a beispielsweise das Wort Mechaniker und der Referenzwert 49c das Wort Übersetzer aufweisen. Die Zusatzinformation 9 wird in diesem Anwendungsbeispiel mit den Referenzwerten 49a, 49b und 49c verglichen und dem Referenzwert 49b zugeordnet. Anschließend wird die dem Referenzwert 49b zugeordnete Nachricht 50b ausgewählt und an die Sendeeinheit 46 übermittelt. Die Sendeeinheit 46 sendet die Nachricht 50b an das Mobilgerät 1. In einer speziellen Ausgestaltung des Verfahrens wird die Nachricht 50b auf Basis der Datenstruktur 10 zu einer Nachricht 60b modifiziert. Zum Beispiel kann die Datenstruktur 10 zusätzlich zu der Zusatzinformation 9 weitere Zusatzinformationen, wie zum Beispiel einen Namen, enthalten, welche dem Identifikationsparameter 5 zugeordnet sind. Die modifizierte Nachricht 60b kann diese weiteren Zusatzinformationen enthalten und kann von der Sendeeinheit 46 an das Mobilgerät 1 gesendet werden.

Das System 15 weist weiterhin einen dritten Scanner 52 mit einer Antenne 53, welche als Rundstrahler ausgebildet ist, und einem Empfangsbereich 54 auf. Der dritte Scanner 52 ist mit dem Datenbankserver 16 verbunden. Mithilfe des zweiten Scanners 42 und des dritten Scanners 52 ist eine Ortung des Mobilgerätes 1 und weiteren in den Empfangsbereichen 43 und 54 befindlichen Mobilgeräten möglich. So kann beispielsweise in dem Moment der manuellen Eingabe der Zusatzinformation 9 mittels des ersten Scanners 2, des zweiten Scanners 42 und/oder des dritten Scanners 52 und des Datenbankservers 16 die Position des Mobilgerätes 1 im Vergleich zu weiteren Mobilgeräten, wie zum Beispiel dem in Fig. 1 gezeigten weiteren Mobilgerät 8 erfasst werden. Hierbei werden die Entfernungen des Mobilgerätes 1 und der weiteren Mobilgeräte, insbesondere dem weiteren Mobilgerät 8, von den jeweiligen Scannern 2, 42 und/oder 52 ermittelt und in dem Datenbankserver 16 ausgewertet. Besonders vorteilhaft wird mittels des ersten Scanners 2, des zweiten Scanners 42 und/oder des dritten Scanners 52 und des Datenbankservers 16 das Mobilgerät 1 während der manuellen Eingabe der Zusatzinformation 9 als ein Nächstnachbarmobilgerät der Registrierungseinheit 4 identifiziert.

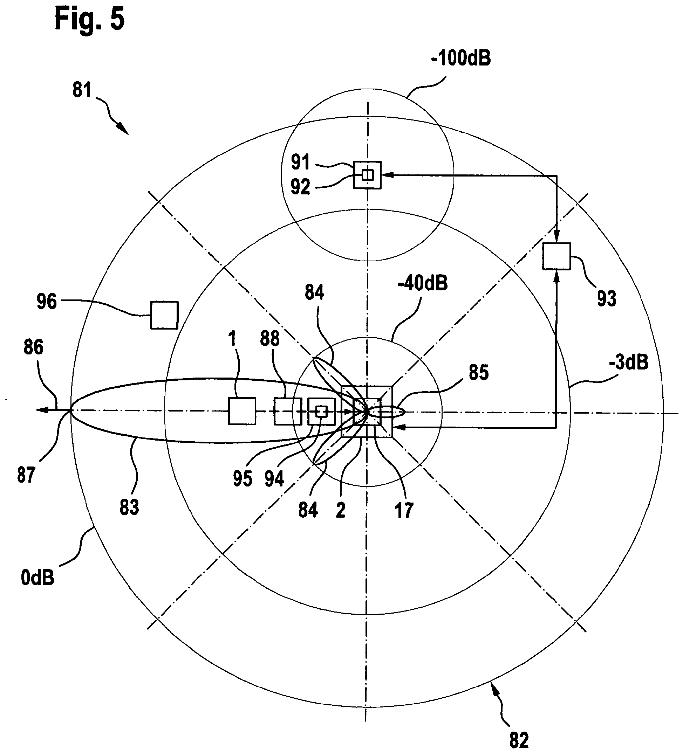

Fig. 5 zeigt eine abgewandelte Ausführungsform 81 des ersten Systems 15 mit dem ersten Scanner 2 mit der Antenne 17 zur Erfassung des Mobilgerätes 1. Die Antenne 17 ist als Richtantenne ausgebildet. Die abgewandelte Ausführungsform weist eine Registrierungseinheit 88 und einen zweiten Scanner 91 auf, wobei der zweite Scanner 91 eine Antenne 92 hat, welche als Rundstrahler ausgebildet ist, d.h. eine gemessene Empfangsfeldstärke der Antenne 92 ist in alle Richtungen gleichmäßig verteilt. In Fig. 5 ist ein Antennendiagramm 82 der Antenne 17 in Polarkoordinaten eingezeichnet, welches die Intensität der Empfangsfeldstärke der Antenne 17 in Abhängigkeit der Richtungen in der Bildebene der Fig. 5 darstellt. Das Antennendiagramm 82 weist eine Hauptkeule 83, zwei Nebenkeulen 84 und eine Rückkeule 85 auf. Die Hauptkeule 83 ist in eine Hauptempfangsrichtung 86 der Antenne 17 ausgerichtet und weist einen Maximalbetrag 87 der maximalen Empfangsfeldstärke auf. Die weiteren im Antennendiagramm 82 dargestellten Werte sind auf den Maximalbetrag 87 der Hauptkeule 83 bezogen. Der Maximalbetrag 87 ist mit 0 dB in das Diagramm eingetragen und alle anderen Werte sind als negative Pegel dargestellt, wie zum Beispiel die Maximalwerte -40db der Nebenkeulen 84. Die Registrierungseinheit 88 ist von der Antenne 17 aus gesehen in der Hauptempfangsrichtung 86 in einem Bereich, welcher von der Hauptkeule 83 überdeckt wird, angeordnet.

Weiterhin sind der erste Scanner 2 und der zweite Scanner 91 mit einer Auswertungseinheit 93 verbunden. Ein vorteilhaftes Verfahren zur Erfassung des Mobilgerätes 1 als Mobilgerät, welches am nächsten an der Registrierungseinheit 88 und bevorzugt genau in einem Bereich, welcher von der Hauptkeule 83 abgedeckt wird, und insbesondere in einem Bereich, welcher sich außerhalb einer Abdeckung der Nebenkeulen 84 befindet, positioniert wird, sieht vor, dass eine gemessene Empfangsfeldstärke eines von dem Mobilgerät 1 ausgesandten Datenpaketes 95 mit dem Identifikationsparameter 94, welches mittels des ersten Scanners 2 empfangen wird, im Folgenden als Richtantennenempfangsfeldstärke bezeichnet, und eine gemessene Empfangsfeldstärke des von dem Mobilgerät 1 ausgesandten Datenpaketes 95 mit dem Identifikationsparameter 94, welches mittels des zweiten Scanners 91 empfangen wird, im Folgenden als Rundstrahlantennenempfangsfeldstärke bezeichnet, an die Auswertungseinheit 93 übertragen wird. Mittels der Auswertungseinheit 93 wird ein Referenzwert für den Identifikationsparameter 94 bestimmt, welcher als Quotient aus der Richtantennenempfangsfeldstärke als Dividend und der Rundstrahlantennenempfangsfeldstärke als Divisor berechnet wird. Ist der Referenzwert höher als ein Grenzwert von beispielsweise 2, 3, 4, 5, 10 oder 100, so wird dem Identifikationsparameter 94 des mittels des Mobilgerätes 1 ausgesandten Datenpaketes 95, welches mittels des ersten Scanners 2 empfangen wurde, dem Mobilgerät 1 zugeordnet. Auf diese Weise kann das Mobilgerät 1 bevorzugt als Nächstnachbarmobilgerät der Registrierungseinheit 88 identifiziert werden. Bei diesem Verfahren weist die Antenne 92 in einer besonderen Ausführungsform einem Abstand von weniger als 30 cm, in einer weiteren Ausführungsform weniger als 20 cm und in einer davon verschiedenen Ausführungsform weniger als 10 cm von der Antenne 17 auf. Besonders vorteilhaft ist die Antenne 92 unmittelbar neben der Antenne 17 angeordnet.

Ein von einem weiteren Mobilgerät 96, welches weiter entfernt als das Mobilgerät 1 von der Registrierungseinheit 88 und außerhalb des Bereiches, welcher von der Hauptkeule 83 überdeckt wird, angeordnet ist, ausgesendetes Datenpaket kann nur mit einer deutlich schwächeren Empfangsfeldstärke mittels des ersten Scanners 2 erfasst werden. Für das vom weiteren Mobilgerät 96 ausgesendete Datenpaket mit einem weiteren Identifikationsparameter ergibt sich entsprechend ein Referenzwert für den weiteren Identifikationsparameter, welcher deutlich niedriger als der Referenzwert für den Identifikationsparameter 94 ist.

Ein alternatives Verfahren zur Erfassung des Mobilgerätes 1 als Nächstnachbarmobilgerät der Registrierungseinheit 88 kann ein Vergleichen der Referenzwerte vorsehen, welche für verschiedene Identifikationsparameter ermittelt wurden. Das Mobilgerät 1 wird dann als Nächstnachbarmobilgerät unter allen Mobilgeräten im Empfangsbereich des ersten Scanners 2 identifiziert, wenn der ermittelte Referenzwert für den Identifikationsparameter 94 im Vergleich zu allen weiteren Referenzwerten, welche für alle weiteren Identifikationsparameter aller weiteren Datenpakete, welche von allen weiteren Mobilgeräten im Empfangsbereich des ersten Scanners 2, wie zum Beispiel von dem weiteren Mobilgerät 96, ausgesandt wurden, am höchsten ist.

## Patentansprüche

1. Verfahren zur Erstellung einer Datenbank (11), bei welchem ein Mobilgerät (1) und zumindest ein Identifikationsparameter (5) verwendet wird, wobei eine Eingabeschnittstelle (6), eine Registrierungseinheit (4) und ein erster Scanner (2) mit einem Empfangsbereich (3) verwendet wird, wobei:
- das Mobilgerät (1) in den Empfangsbereich (3) des ersten Scanners (2) eingebracht wird,
- mittels des Mobilgerätes (1) der Identifikationsparameter (5) ausgesendet wird,
- der Identifikationsparameter (5) vom ersten Scanner (2) empfangen wird,
- mittels der Registrierungseinheit (4) ein Zugang zur Eingabeschnittstelle (6) bereitgestellt wird,
- eine manuelle Bedienung der Eingabeschnittstelle (6) erfolgt und mittels der manuellen Bedienung eine Eingabe von zumindest einer Zusatzinformation (9) durchgeführt wird,
- eine Datenstruktur (10) erstellt wird, in welcher die Zusatzinformation (9) dem Identifikationsparameter (5) zugeordnet wird,
- die Datenstruktur (10) in der Datenbank (11) gespeichert wird, **dadurch gekennzeichnet, dass** der erste Scanner (2) eine Antenne (17) aufweist, welche als Richtantenne ausgeführt ist und von einer Hauptempfangsrichtung (86) des ersten Scanners (2) empfängt, und
- das Mobilgerät (1), die Registrierungseinheit (4) und der erste Scanner (2) bei der manuellen Bedienung der Eingabeschnittstelle (6) derart zueinander angeordnet sind, dass zwischen dem Mobilgerät (1), der Registrierungseinheit (4) und dem ersten Scanner (2) ein Raum (14) gebildet ist, welcher kleiner ist als eine Person zum Verweilen im Stehen benötigt.

2. Verfahren nach Anspruch 1,
**dadurch gekennzeichnet, dass**
das Verfahren ein passives Verfahren ist, bei welchem von dem Mobilgerät (1) ausgesendete Signale mittels des ersten Scanners (2) empfangen werden und das Mobilgerät (1) nicht von dem ersten Scanner (2) angefunkt wird.

3. Verfahren nach einem der vorhergehenden Ansprüche,
**dadurch gekennzeichnet, dass**
das Mobilgerät (1) den Identifikationsparameter (5) in einem Rahmen der durch das Mobilgerät (1) in einem normalen Betrieb regelmäßig ausgesendeten Meldungen aussendet.

4. Verfahren nach einem der vorhergehenden Ansprüche,
**dadurch gekennzeichnet, dass**
das Mobilgerät (1) den Identifikationsparameter (5) mittels einer Funktechnik, insbesondere mittels Bluetooth- oder WLAN-Funktechnik, versendet, bei welcher jedes von dem Mobilgerät (1) versendete Datenpaket (95) den Identifikationsparameter (5) aufweist.

5. Verfahren nach einem der vorhergehenden Ansprüche,
**dadurch gekennzeichnet, dass**
die Registrierungseinheit (4) in der Hauptempfangsrichtung (86) des ersten Scanners (2) angeordnet ist.

6. Verfahren nach einem der vorhergehenden Ansprüche,
**dadurch gekennzeichnet, dass**
die Zusatzinformation (9) eine personenbezogene Information umfasst und diese in der Datenstruktur (10) abgespeichert wird.

7. Verfahren nach einem der vorhergehenden Ansprüche,
**dadurch gekennzeichnet, dass**
die Zusatzinformation (9) eine objektbezogene Information umfasst und diese in der Datenstruktur (10) abgespeichert wird.

8. Verfahren nach einem der vorhergehenden Ansprüche,
**dadurch gekennzeichnet, dass**
das Mobilgerät (1) in einem Mobilfunknetz mit einem ersten Funkstandard betreibbar ist und ein von dem Mobilgerät (1) versendetes Datenpaket (95) von dem ersten Scanner (2) über ein weiteres Funknetz empfangen wird, wobei das weitere Funknetz einen vom ersten Funkstandard verschiedenen zweiten Funkstandard aufweist.

9. Verfahren nach Anspruch 8,
**dadurch gekennzeichnet, dass** der zweite Funkstandard ein Bluetooth-Standard oder ein WLAN-Standard ist.

10. Verfahren nach einem der vorhergehenden Ansprüche,
**dadurch gekennzeichnet, dass**
zum Empfangen des Identifikationsparameters (5) eine Empfangsfeldstärke des Mobilgerätes (1) gemessen wird.

11. Verfahren nach einem der vorhergehenden Ansprüche,
**dadurch gekennzeichnet, dass**
zumindest ein zweiter Scanner (42) mit einem Empfangsbereich (43) verwendet wird, wobei der zweite Scanner (42) eine Antenne (44) aufweist, welche als Rundstrahler ausgebildet ist, und
- das Mobilgerät (1) in den Empfangsbereich (43) des zweiten Scanners (42) eingebracht wird,
- mittels des Mobilgerätes (1) der Identifikationsparameter (5) ausgesendet wird,
- der Identifikationsparameter (5) vom zweiten Scanner (42) empfangen wird,
- auf die Datenbank (11) zugegriffen wird und die Datenstruktur (10) ausgelesen wird, welche den Identifikationsparameter (5) des Mobilgerätes (1) aufweist,
- anhand der Zusatzinformation (9) der ausgelesenen Datenstruktur (10) eine Kategorisierung des Mobilgerätes (1) durchgeführt wird,
- in Abhängigkeit der erfolgten Kategorisierung eine Nachricht (50b; 60b) an das Mobilgerät (1) gesendet wird.

12. System (15) zum Erstellen einer Datenbank (11) mit einem Mobilgerät (1), welches einen Identifikationsparameter (5) aussendet,
wobei das System (15) eine Eingabeschnittstelle (6), eine Registrierungseinheit (4) und einen ersten Scanner (2) mit einem Empfangsbereich (3) aufweist, das Mobilgerät (1) in den Empfangsbereich (3) des ersten Scanners (2) einbringbar ist, der Identifikationsparameter (5) mittels des ersten Scanners (2) empfangbar ist, die Registrierungseinheit (4) einen Zugang zur Eingabeschnittstelle (6) aufweist, eine Zusatzinformation (9) manuell über die Eingabeschnittstelle (6) eingebbar ist, mittels des Systems (15) eine Datenstruktur (10) erstellbar ist, in welcher die Zusatzinformation (9) dem Identifkationsparameter (5) zugeordnet ist, und die Datenstruktur (10) in der Datenbank (11) speicherbar ist,
**dadurch gekennzeichnet, dass** der erste Scanner (2) eine Antenne (17) aufweist, welche als Richtantenne ausgeführt ist und von einer Hauptempfangsrichtung (86) des ersten Scanners (2) empfängt, und das Mobilgerät (1), die Registrierungseinheit (4) und der erste Scanner (2) bei einer manuellen Bedienung der Eingabeschnittstelle (6) derart zueinander angeordnet sind, dass zwischen dem Mobilgerät (1), der Registrierungseinheit (4) und dem ersten Scanner (2) ein Raum (14) gebildet ist, welcher kleiner ist als eine Person zum Verweilen im Stehen benötigt.

13. System (15) nach Anspruch 12,
**dadurch gekennzeichnet, dass**
das System (15) einen zweiten Scanner (42) mit einem Empfangsbereich (43) aufweist, wobei der zweite Scanner (42) eine Antenne (44) aufweist, welche als Rundstrahler ausgebildet ist, das Mobilgerät (1) in den Empfangsbereich (43) des zweiten Scanners (42) einbringbar ist, der Identifikationsparameter (5) vom zweiten Scanner(42) empfangbar ist, die Datenstruktur (10), welche den Identifikationsparameter (5) des Mobilgerätes (1) aufweist, mittels Zugriffes auf die Datenbank (11) auslesbar ist, das Mobilgerät (1) anhand der Zusatzinformation (9) der ausgelesen Datenstruktur (10) kategorisierbar ist und mittels des Systems (15) in Abhängigkeit einer erfolgten Kategorisierung eine Nachricht (50b; 60b) an das Mobilgerät (1) versendbar ist.

## Claims

1. Method for generating a database (11), in which a mobile device (1) and at least one identification parameter (5) is used, wherein an input interface (6), a registration unit (4) and a first scanner (2) with a reception zone (3) is used, wherein:
- the mobile device (1) is brought into the reception zone (3) of the first scanner (2),
- the identification parameter (5) is transmitted by means of the mobile device (1),
- the identification parameter (5) is received by the first scanner (2),
- an access to the input interface (6) is provided by means of the registration unit (4),
- a manual operation of the input interface (6) is executed and by means of the manual operation an input of at least one additional information (9) is carried out,
- a data structure (10) is generated, in which the additional information (9) is assigned to the identification parameter (5),
- the data structure (10) is stored in the database (11),
**characterized in that**
- the first scanner (2) comprises an antenna (17), which is designed as a directional antenna and receives from a main direction of reception (86) of the first scanner (2), and
- the mobile device (1), the registration unit (4) and the first scanner (2) are arranged with respect to each other when executing the manual operation of the input interface (6) in such a manner that between the mobile device (1), the registration unit (4), and the first scanner (2) a space (14) is built, which is smaller than one which a person requires to stay standing.

2. Method according to claim 1.
**characterized in that**
the method is a passive method, in which signals sent out from the mobile device (1) are received by means of the first scanner (2), and the mobile device (1) is not radioed by the first scanner (2).

3. Method according to one of the preceding claims,
**characterized in that**
the mobile device (1) sends out the identification parameter (5) in line with the signals regularly sent out in a normal operation by means of the mobile device (1).

4. Method according to one of the preceding claims,
**characterized in that**
the mobile device (1) transmits the identification parameter (5) by means of a radio technology, particularly by means of Bluetooth or WLAN radio technology, in which each data packet (95) sent from the mobile device (1) comprises the identification parameter (5).

5. Method according to one of the preceding claims,
**characterized in that**
the registration unit (4) is arranged in the main direction of reception (86) of the first scanner (2).

6. Method according to one of the preceding claims,
**characterized in that**
the additional information (9) comprises a person-related information and this is stored in the data structure (10).

7. Method according to one of the preceding claims,
**characterized in that**
the additional information (9) comprises an object-related information and this is stored in the data structure (10).

8. Method according to one of the preceding claims,
**characterized in that**
the mobile device (1) is operable in a mobile radio network with a first radio standard and a data packet (95) sent from the mobile device (1) is received by means of the first scanner (2) via a further radio network, wherein the further radio network comprises a second radio standard different from the first radio standard.

9. Method according to claim 8,
**characterized in that**
the second radio standard is a Bluetooth standard or a WLAN standard.

10. Method according to one of the preceding claims,
**characterized in that**
a receiving field strength of the mobile device (1) is measured for receiving the identification parameter (5).

11. Method according to one of the preceding claims,
**characterized in that**
at least a second scanner (42) with a reception zone (43) is used, wherein the second scanner (42) comprises an antenna, which is designed as an omnidirectional antenna, and
- the mobile device (1) is brought into the reception zone (43) of the second scanner (42),
- the identification parameter (5) is sent out by means of the mobile device (1),
- the identification parameter (5) is received by the second scanner (42),
- the database (11) is accessed, and the data structure (10) is read out, which comprises the identification parameter (5) of the mobile device (1),
- a categorization of the mobile device (1) is performed on the basis of the additional information (9) of the read-out data structure (10).
- a message (50b; 60b) is sent to the mobile device (1) as a function of the performed categorization.

12. System (15) for generating a database (11) with a mobile device (1), which sends out an identification parameter (5),
wherein
the system (15) comprises an input interface (6), a registration unit (4) and a first scanner (2) with a reception zone (3), the mobile device (1) is introducible into the reception zone (3) of the first scanner (2), the identification parameter (5) is receivable by means of the first scanner (2), the registration unit (4) comprises an access to the input interface (6), an additional information (9) is manually enterable via the input interface (6), a data structure (10), in which the additional information (9) is assigned to the identification parameter (5), is generatable by means of the system (15) and the data structure (10) is storable in the database (11),
**characterized in that**
the first scanner (2) comprises an antenna (17), which is designed as a directional antenna and receives from a main direction of reception (86) of the first scanner (2), and
the mobile device (1), the registration unit (4) and the first scanner (2) are arranged with respect to each other when executing a manual operation of the input interface (6) in such a manner that between the mobile device (1), the registration unit (4), and the first scanner (2) a space (14) is built, which is smaller than one which a person requires to stay standing.

13. System (15) according to claim 12,
**characterized in that**
the system (15) comprises a second scanner (42) with a reception zone (43), wherein the second scanner (42) comprises an antenna, which is designed as an omnidirectional antenna, the mobile device (1) is introducible into the reception zone (43) of the second scanner (42), the identification parameter (5) is receivable by the second scanner (42), the data structure (10), which comprises the identification parameter (5) of the mobile device (1), is readable by means of access to the database (11), the mobile device (1) is categorizable on the basis of the additional information (9) of the read-out data structure (10) and a message (50b; 60b) is transmissible to the mobile device (1) by means of the system (15) as a function of a performed categorization.

## Revendications

1. Procédé pour produire une base de données (11), dans lequel un appareil mobile (1) et au moins un paramètre d'identification (5) sont utilisés, **caractérisé en ce qu'**une interface d'entrée (6), une unité d'enregistrement (4) et un premier numériseur (2) avec une zone de réception (3) sont utilisés, dans lequel :
- l'appareil mobile (1) est placé dans la zone de réception (3) du premier numériseur (2),
- le paramètre d'identification (5) est émis au moyen de l'appareil mobile (1),
- le paramètre d'identification (5) est reçu par le premier numériseur (2),
- un accès à l'interface d'entrée (6) est fourni au moyen de l'unité d'enregistrement (4),
- une commande manuelle de l'interface d'entrée (6) se produit et une saisie d'au moins une information supplémentaire (9) est faite au moyen de la commande manuelle,
- une structure de données (10) est générée, dans laquelle l'information supplémentaire (9) est associée au paramètre d'identification (5),
- la structure de données (10) est stockée dans la base de données (11),
- dans lequel le premier numériseur (2) présente une antenne (17), qui est conçue sous la forme d'une antenne directionnelle et reçoit à partir d'une direction de réception principale (86) du premier numériseur (2) et
- l'appareil mobile (1), l'unité d'enregistrement (4) et le premier numériseur (2) sont agencés les uns par rapport aux autres lors de la commande manuelle de l'interface d'entrée (6) de telle sorte qu'un espace (14) est formé entre l'appareil mobile (1), l'unité d'enregistrement (4) et le premier numériseur (2), lequel espace est plus petit que ce dont une personne a besoin pour rester debout.

2. Procédé selon la revendication 1,
**caractérisé en ce que**
le procédé est un procédé passif, dans lequel des signaux émis par l'appareil mobile (1) sont reçus au moyen du premier numériseur (2) et le premier numériseur (2) n'émet pas par radio à l'appareil mobile (1).

3. Procédé selon l'une quelconque des revendications précédentes,
**caractérisé en ce que**
l'appareil mobile (1) envoie le paramètre d'identification (5) dans le cadre des messages envoyés régulièrement par l'appareil mobile (1) en fonctionnement normal.

4. Procédé selon l'une quelconque des revendications précédentes,
**caractérisé en ce que**
l'appareil mobile (1) envoie le paramètre d'identification (5) au moyen d'une technique de radiocommunication, en particulier au moyen d'une technique de radiocommunication Bluetooth ou WLAN, dans lequel chaque paquet de données (95) envoyé par l'appareil mobile (1) présente le paramètre d'identification (5).

5. Procédé selon l'une quelconque des revendications précédentes,
**caractérisé en ce que**
l'unité d'enregistrement (4) est agencée dans la direction de réception principale (86) du premier numériseur (2).

6. Procédé selon l'une quelconque des revendications précédentes,
**caractérisé en ce que**
l'information supplémentaire (9) comprend une information personnelle et celle-ci est stockée dans la structure de données (10).

7. Procédé selon l'une quelconque des revendications précédentes,
**caractérisé en ce que**
l'information supplémentaire (9) comprend une information relative à un objet et celle-ci est stockée dans la structure de données (10).

8. Procédé selon l'une quelconque des revendications précédentes,
**caractérisé en ce que**
l'appareil mobile (1) est utilisable dans un réseau radio mobile avec une première norme radio, et un paquet de données (95) envoyé par l'appareil mobile (1) est reçu par le premier numériseur (2) via un réseau radio supplémentaire, dans lequel le réseau radio supplémentaire présente une seconde norme radio différente de la première norme.

9. Procédé selon la revendication 8,
**caractérisé en ce que** la seconde norme de radio est une norme Bluetooth ou une norme WLAN.

10. Procédé selon l'une quelconque des revendications précédentes,
**caractérisé en ce qu'**une intensité de champ de réception de l'appareil mobile (1) est mesurée pour recevoir le paramètre d'identification (5).

11. Procédé selon l'une quelconque des revendications précédentes,
**caractérisé en ce que**
au moins un second numériseur (42) avec une zone de réception (43) est utilisé, dans lequel le second numériseur (42) présente une antenne (44) qui est conçue sous la forme d'une antenne omnidirectionnelle, et
- l'appareil mobile (1) est introduit dans la zone de réception (43) du second numériseur (42),
- le paramètre d'identification (5) est émis au moyen de l'appareil mobile (1),
- le paramètre d'identification (5) est reçu par le second numériseur (42),
- la base de données (11) est accédée et la structure de données (10) qui présente le paramètre d'identification (5) de l'appareil mobile (1) est lue,
- une catégorisation de l'appareil mobile (1) est effectuée sur la base de l'information supplémentaire (9) de la structure de données lue (10),
- en fonction de la catégorisation intervenue, un message (50b ; 60b) est envoyé à l'appareil mobile (1).

12. Système (15) pour générer une base de données (11) avec un appareil mobile (1) qui envoie un paramètre d'identification (5),
**caractérisé en ce que**
le système (15) présente une interface d'entrée (6), une unité d'enregistrement (4) et un premier numériseur (2) avec une zone de réception (3), l'appareil mobile (1) peut être amené dans la zone de réception (3) du premier numériseur (2), le paramètre d'identification (5) peut être reçu au moyen du premier numériseur (2), l'unité d'enregistrement (4) a accès à l'interface d'entrée (6), une information supplémentaire (9) peut être entrée manuellement via l'interface d'entrée (6), une structure de données (10) peut être générée au moyen du système (15), dans laquelle l'information supplémentaire (9) est associée au paramètre d'identification (5), et la structure de données (10) peut être stockée dans la base de données (11), dans lequel le premier numériseur (2) présente une antenne (17) qui est conçue sous la forme d'une antenne directionnelle et reçoit en provenance d'une direction de réception principale (86) du premier numériseur (2), et l'appareil mobile (1), l'unité d'enregistrement (4) et le premier numériseur (2) lors de la commande manuelle de l'interface d'entrée (6), sont agencés les uns par rapport aux autres de telle sorte qu'un espace (14) est formé entre l'appareil mobile (1), l'unité d'enregistrement (4) et le premier numériseur (2), lequel espace est plus petit que ce dont une personne a besoin pour rester debout.

13. Système (15) selon la revendication 12,
**caractérisé en ce que**
le système (15) présente un second numériseur (42) avec une zone de réception (43), dans lequel le second numériseur (42) présente une antenne (44) qui est conçue sous la forme d'une antenne omnidirectionnelle, l'appareil mobile (1) peut être introduit dans la zone de réception (43) du second numériseur (42), le paramètre d'identification (5) peut être reçu par le second numériseur (42), la structure de données (10), qui présente le paramètre d'identification (5) de l'appareil mobile (1), peut être lue au moyen d'un accès à la base de données (11), l'appareil mobile (1) peut être catégorisé sur la base de l'information supplémentaire (9) de la structure de données lue (10), et un message (50b; 60b) peut être envoyé à l'appareil mobile (1) au moyen du système (15) en fonction d'une catégorisation intervenue.
